# EUROPEAN PATENT APPLICATION

(11) **EP 3 232 026 A1**
(43) Date of publication of application: **18.10.2017**
(21) Application number: 17156323.2
(22) Date of filing: 15.02.2017
(51) Int. Cl.: F01M 1/06, F01M 1/08, F01M 11/02, F02F 3/22, F16J 1/16

(54) **INTERNAL COMBUSTION ENGINE**

(30) Priority: 13.04.2016 JP 2016080428
(71) Applicant: TOYOTA JIDOSHA KABUSHIKI KAISHA, Toyota-Shi, Aichi-Ken 471-8571 (JP)
(72) Inventor: KIMURA, Yuichiro, TOYOTA-SHI, AICHI-KEN, 471-8571 (JP)
(74) Representative: Intès, Didier Gérard André

(57) **Abstract**

A piston pin (12) is provided that includes a pin oil channel (32) to which oil is supplied from the connecting rod (14). A piston (10) is provided that includes a pin boss (10a), an oil groove (26) formed in a pin bore surface (10b1), and a communication oil channel (28) that connects a cooling channel (24) that is provided closer to a combustion chamber than the piston pin (12) and the oil groove (26) to each other. The pin oil channel (32) opens in the outer surface of the piston pin at a point corresponding to the oil groove (26). In the view of the piston (10) from the direction of the piston pin axis, the oil groove (26) is formed in the pin bore surface (10b1) at a position closer to a crankcase than a second straight line (L1) and is not formed in a part of the pin bore surface (10b1) that is closer to the combustion chamber than the second straight line (L1).

## Description

### Background of the Invention

### Technical Field

The present disclosure relates to an internal combustion engine that includes a piston-crank mechanism.

### Background Art

For example, JP 2000-054816 A discloses an internal combustion engine that includes a piston-crank mechanism. The internal combustion engine is configured so that oil is supplied from a connecting rod to the interior of a piston through a piston pin. More specifically, the piston includes a pin boss that has a pin bore in which the piston pin is inserted. An oil groove is formed in the pin boss, and the oil groove is in communication with an oil channel formed in the interior of the piston. The oil groove is formed along the entire circumference of the surface of the pin bore.

JP 2000-054816 A is a patent document which may be related to the present disclosure.

### Summary of the Invention

When a combustion pressure is exerted on a crown surface of a piston, a high load based on the combustion pressure is exerted on a pin bore surface in a part closer to the crown surface of the piston (that is, in a part closer to a combustion chamber). If an oil groove is formed in the pin bore surface closer to the crown surface of the piston as with the configuration described in JP 2000-054816 A, the area of the pin bore surface that receives the load decreases, so that the surface pressure increases. As a result, the durability of the piston may deteriorate.

The present disclosure has been made to address the problem described above, and an object of the present disclosure is to provide an internal combustion engine capable of supplying oil from a connecting rod to the interior of a piston through a piston pin while suppressing deterioration of the durability of the piston.

An internal combustion engine according to the present disclosure includes a piston-crank mechanism. The internal combustion engine includes: a piston pin that is coupled to a connecting rod and includes a pin oil channel to which oil is supplied from the connecting rod; and a piston that includes a pin boss having a pin bore in which the piston pin is inserted, an oil groove formed in a pin bore surface, which is a surface of the pin bore, and a communication oil channel that connects an oil channel in an upper part of the piston that is provided closer to a combustion chamber than the piston pin and the oil groove to each other. The pin oil channel opens in an outer surface of the piston pin at a point corresponding to the oil groove. In a view of the piston from a direction of a piston pin axis, the oil groove is formed in the pin bore surface at a position closer to a crankcase than a first straight line, which passes through a center of the pin bore and is perpendicular to a cylinder axial line, and is not formed in a part of the pin bore surface that is closer to the combustion chamber than the first straight line.

In the view of the piston from the direction of the piston pin axis, the oil groove may be formed in the pin bore surface in a circumferential direction of the pin bore in such a manner that a section of the oil groove extending on an anti-thrust side is longer than a section of the oil groove extending on a thrust side, the thrust side being a side of the piston at which a side thrust is exerted on the side surface of the piston immediately after a compression top dead center with respect to a second straight line, which passes through the center of the pin bore and is in parallel with the cylinder axial line, and the anti-thrust side being a side of the piston opposite to the thrust side.

In the view of the piston from the direction of the piston pin axis, the communication oil channel may be formed in the pin bore surface only on one side of the second straight line that passes through the center of the pin bore and is parallel with the cylinder axial line.

A length of the oil groove in the pin bore surface in the circumferential direction of the pin bore may be greater than a diameter of the communication oil channel.

The one side on which the communication oil channel is formed in the pin bore surface may be an anti-thrust side that is opposite to a thrust side at which a side thrust is exerted on the side surface of the piston immediately after a compression top dead center.

The piston pin may be rotatable with respect to both the connecting rod and the pin boss. The pin oil channel may open in the outer surface of the piston pin to form an oil hole at a position corresponding to the oil groove. The pin bore surface may have a sharp edge at a connection between the oil groove and the communication oil channel. The one side on which the communication oil channel is formed in the pin bore surface may be determined so that a direction from a base end to a tip end of the edge of the pin bore surface agrees with a direction of rotation of a crankshaft in the view of the piston and the crankshaft from the direction of the piston pin axis.

The piston pin may be rotatable with respect to both the connecting rod and the pin boss. The pin oil channel may open in the outer surface of the piston pin to form a plurality of oil holes at positions corresponding to the oil groove. An angular length of the oil groove in the pin bore surface in the circumferential direction of the pin bore may be greater than an angle between adjacent two of the plurality of oil holes in the circumferential direction of the piston.

According to the internal combustion engine of the present disclosure, in the view of the piston from the direction of the piston pin axis, the oil groove provided for the pin boss of the piston to receive oil from the piston pin is formed in the pin bore surface at a position closer to the crankcase than the first straight line that passes through the center of the pin bore and is perpendicular to the cylinder axial line and is not formed in the part of the pin bore surface closer to the combustion chamber than the first straight line. Thus, the part of the pin bore surface closer to the combustion chamber on which a high load based on a high combustion pressure is exerted can have a large area for receiving the load. Thus, according to the present disclosure, oil can be supplied to the interior of the piston from the connecting rod through the piston pin while suppressing deterioration of the durability of the piston.

### Brief Description of the Drawings

Fig. 1 is a schematic diagram showing a piston-crank mechanism of an internal combustion engine according to a first embodiment of the present disclosure;
Fig. 2 is a cross-sectional view of a piston, a piston pin and a connecting rod taken along the line A-A in Fig. 1;
Fig. 3 is a cross-sectional view of the piston taken along the line B1-B1 in Fig. 2 (a view from the direction of the piston pin axis) for illustrating a specific configuration of oil channels formed in the piston;
Figs. 4A to 4C are diagrams for illustrating a specific configuration of the piston pin;
Fig. 5 is a diagram for showing an example of the surface pressure distribution of a pin bore surface at the time when the combustion pressure is exerted on the crown surface of the piston;
Fig. 6 is a diagram for illustrating a specific configuration of a pin boss of a piston and its periphery according to a second embodiment of the present disclosure;
Fig. 7 is a diagram for illustrating characteristic parts of a configuration according to a third embodiment of the present disclosure; and
Figs. 8A and 8B are diagrams for illustrating effects of the configuration according to the third embodiment of the present disclosure.

### Detailed Description

In the following, embodiments of the present disclosure will be described with reference to the drawings. In the drawings, the same reference numerals denote the same or similar components.

### First Embodiment

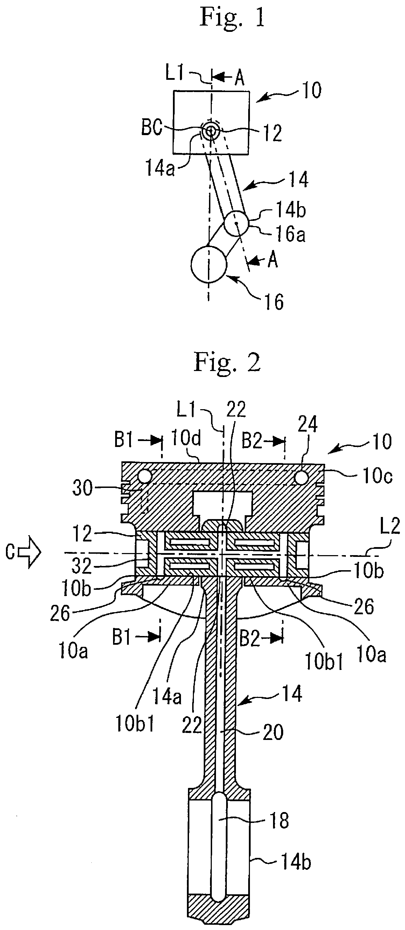

A first embodiment of the present disclosure will be first described with reference to Figs. 1 to 5. Fig. 1 is a schematic diagram showing a piston-crank mechanism of an internal combustion engine according to the first embodiment of the present disclosure. As shown in Fig. 1, a piston 10 is coupled to a small end 14a of a connecting rod 14 by a piston pin 12. A large end 14b of the connecting rod 14 is coupled to a crank pin 16a of a crankshaft 16. The line L1 in Fig. 1 indicates an axial line of a cylinder in which the piston 10 is inserted (that is, an axial line of the piston 10). With the configuration according to the present embodiment, for example, the cylinder axial line L1 passes through a center BC of a pin bore 10b in which the piston pin 12 is inserted. However, the present disclosure includes a configuration in which the center of the pin bore is offset from the cylinder axial line (piston axial line).

Fig. 2 is a cross-sectional view of the piston 10, the piston pin 12 and the connecting rod 14 taken along the line A-A in Fig. 1. As shown in Fig. 2, a connecting-rod oil groove 18 is formed in an inner surface of the large end 14b of the connecting rod 14. The connecting-rod oil groove 18 is in communication with a cylinder-block internal oil channel (not shown) via an internal oil channel (not shown) of the crankshaft 16. An oil pump (not shown) supplies oil under pressure to these internal oil channels. The oil supplied under pressure is supplied to the connecting-rod oil groove 18 through the crank pin 16a.

The connecting-rod oil groove 18 is connected to one end of a connecting-rod internal oil channel 20. The connecting-rod internal oil channel 20 is formed in the connecting rod 14 so as to extend from the large end 14b to the small end 14a. Thus, the oil is supplied also to the connecting-rod internal oil channel 20 through the connecting-rod oil groove 18, and the oil exerts a pressure in the connecting-rod internal oil channel 20. The connecting-rod internal oil channel 20 is connected, at another end thereof, to a connecting-rod oil groove 22 formed in an inner surface of the small end 14a. The connecting-rod oil groove 22 is formed along the entire inner circumference of the small end 14a, for example. The oil in the connecting-rod internal oil channel 20 is supplied to the piston pin 12 through the connecting-rod oil groove 22. In the present embodiment, the connecting-rod internal oil channel 20, which is a dedicated oil channel for oil circulation, is described as being formed in the connecting rod 14. However, if the connecting rod is hollow for weight reduction, the hollow part may be used as a part of the oil channel for supplying oil to the piston pin 12.

As shown in Fig. 2, the piston 10 includes a pair of pin bosses 10a. Each of the pair of pin bosses 10a has the pin bore 10b in which the piston pin 12 is inserted. The pair of pin bores 10b are aligned along a pin bore axis (piston pin axis) L2 that is perpendicular to the cylinder axial line L1. With the configuration according to the present embodiment, the piston pin 12 can rotate with respect to both the pin boss 10a and the small end 14a of the connecting rod 14. Thus, in order to prevent the piston pin 12 from dropping off the pin boss 10a or the connecting rod 14, axial movement of the piston pin 12 with respect to the pin boss 10a or the connecting rod 14 is limited by a snap ring (not shown).

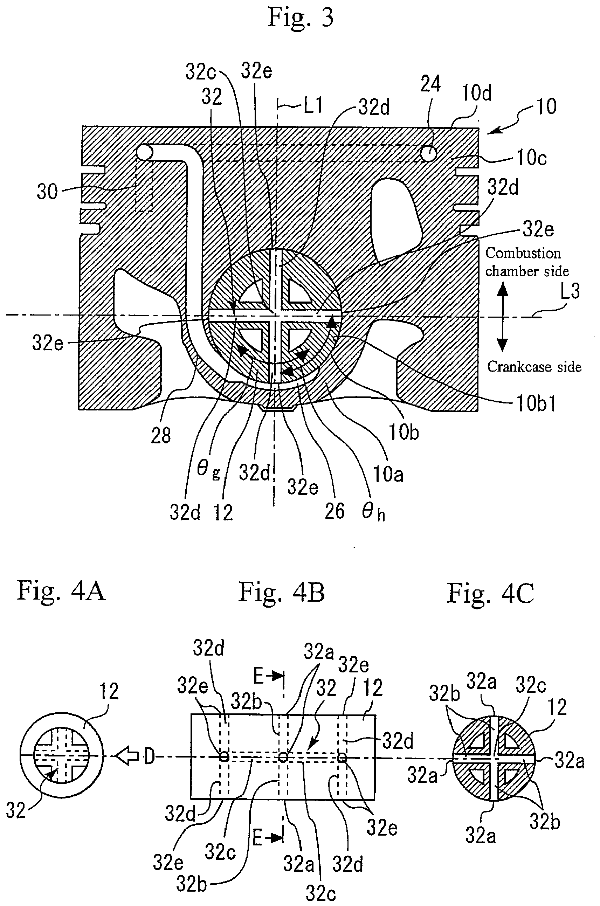

Next, with reference to Figs. 3 and 4 in addition to Fig. 2, a configuration of each of the oil channels in the piston 10 and the piston pin 12 will be described. Fig. 3 is a cross-sectional view of the piston 10 taken along the line B1-B1 in Fig. 2 (a view from the direction of the piston pin axis) for illustrating a specific configuration of oil channels formed in the piston 10. A cross-sectional view of the piston 10 taken along the line B2-B2 in Fig. 2 is the same as Fig. 3. Figs. 4A to 4C are diagrams for illustrating a specific configuration of the piston pin 12. More specifically, Fig. 4A is a view of the piston pin 12 from the direction of the arrow C in Fig. 2 (the direction of the piston pin axis), Fig. 4B is a view of the piston pin 12 from the direction of the arrow D in Fig. 4A, and Fig. 4C is a cross-sectional view of the piston pin 12 taken along the line E-E in Fig. 4B.

As shown in Fig. 3, as one of the oil channels, a cooling channel 24 for cooling a top part 10c of the piston 10 with oil is formed in the piston 10. An oil groove 26 is formed in an inner surface (pin bore surface) 10b1 of the pin bore 10b. The oil groove 26 is formed to extend in the circumferential direction in the pin bore surface 10b1. Oil is supplied to the oil groove 26 from a pin oil channel 32 described later.

In the view of the piston 10 shown in Fig. 3 (that is, the view from the direction of the piston pin axis), the oil groove 26 is formed in the pin bore surface 10b1 at a position closer to a crankcase than a straight line L3 that passes through the pin bore center BC and is perpendicular to the cylinder axial line L1. In other words, the oil groove 26 is not formed in the part of the pin bore surface 10b1 closer to a combustion chamber than the straight line L3 that passes through the pin bore center BC.

Furthermore, a communication oil channel 28 that connects the cooling channel 24 and the oil groove 26 to each other is formed in the piston 10. The oil groove 26 is formed in each of the pair of pin bosses 10a. The communication oil channel 28 is provided for each oil groove 26. More specifically, as shown in Fig. 3, the communication oil channel 28 extends straight from a vicinity of the cooling channel 24 to the pin boss 10a, extends in the pin boss 10a along the outer circumference of the pin bore 10b and then is connected to the oil groove 26.

According to the present embodiment, considering one pin boss 10a, in the view of the piston 10 shown in Fig. 3 (that is, the view from the direction of the piston pin axis), the communication oil channel 28 is formed in the pin bore surface 10b1 only on one side of a straight line that passes through the pin bore center BC and is parallel with the cylinder axial line L1 (on the left side of the cylinder axial line L1 in the example shown in Fig. 3). The straight line coincides with the cylinder axial line L1 in the example shown in Fig. 3. Thus, according to the present embodiment, two communication oil channels 28 are provided for each piston 10.

As shown in Fig. 3, the oil grooves 26 and the communication oil channel 28 are formed in such a manner that the length of the oil groove 26 in the pin bore surface 10b1 along the circumference of the pin bore 10b is greater than the diameter of the communication oil channel 28. In addition, a discharge oil channel 30 is connected to the cooling channel 24 for discharging the oil supplied to the interior of the piston 10 to the outside of the piston 10. The piston 10 provided with the oil channels, such as the oil grooves 26 and the communication oil channels 28 described above, can be manufactured with a 3D printer, for example.

As shown in Figs. 2, 3 and 4A to 4C, a pin oil channel 32 is formed in the piston pin 12. More specifically, as shown in Fig. 2, the pin oil channel 32 opens in an outer surface of the piston pin 12 to form an oil hole 32a at a position corresponding to the connecting-rod internal oil channel 20. As shown in Figs. 4A to 4C, a plurality of oil holes 32a (four oil holes 32a in the example shown in Figs. 4A to 4C) are formed in the outer surface of the piston pin 12 at regular angular intervals along the circumference thereof. The pin oil channel 32 includes a plurality of radial oil channel sections 32b (four radial oil channel sections 32b in the example shown in Figs. 4A to 4C) that extend from the respective oil holes 32a to the center of the piston pin 12.

The piston oil channel 32 includes an axial oil channel section 32c that extends in the axial direction of the piston pin at the center of the piston pin 12 where the radial oil channel sections 32b intersect with each other. As shown in Fig. 2, the oil channel section 32c is formed to extend in the axial direction of the piston pin to points corresponding to the oil grooves 26 of the pin bosses 10a. At each of the points, the oil channel 32 includes a plurality of radial oil channel sections 32d (four radial oil channel sections 32d in the example shown in Figs. 4A to 4C) that extend radially from the axial oil channel section 32c. As shown in Fig. 4B, each radial oil channel section 32d opens in the outer surface of the piston pin 12 to form an oil hole 32e. As with the oil holes 32a, a plurality of oil holes 32e (four oil holes 32e in the example shown in Figs. 4A to 4C) are formed in the outer surface of the piston pin 12 at regular angular intervals along the circumference of the piston pin 12. However, the plurality of oil holes 32a or 32e do not always have to be formed at regular angular intervals and may be formed at arbitrary irregular angular intervals.

As shown in Fig. 3, the oil grooves 26 and the piston pin 12 are formed in such a manner that an angular length θg (an angular length about the pin bore center BC) of the oil groove 26 in the pin bore surface 10b1 along the circumference of the pin bore 10b is greater than an angle θh (an angle about the pin bore center BC) between adjacent oil holes 32e along the circumference of the piston pin 12. The angle θh between the oil holes 32e can be calculated by dividing 360° by the number of the oil holes 32e.

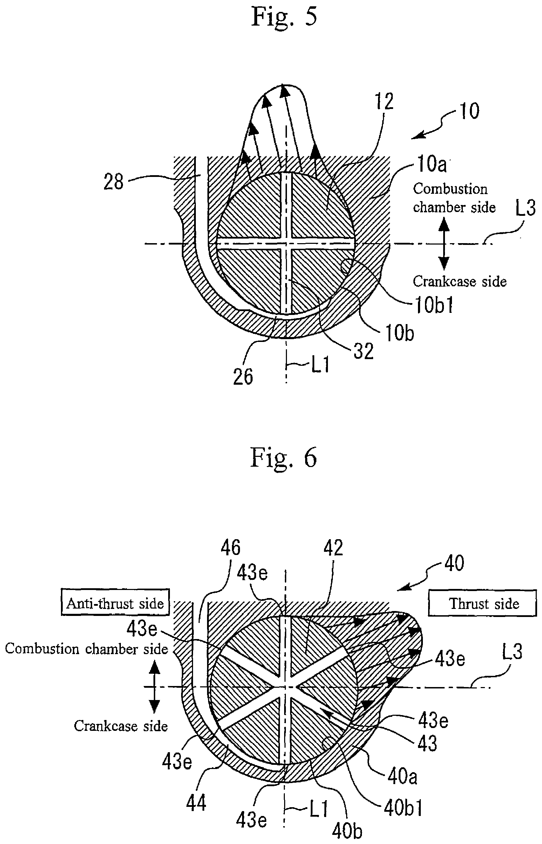

The internal combustion engine having the piston 10 and its periphery configured as described above has advantages described below. When a combustion pressure is exerted on a crown surface 10d (see Fig. 3) of the piston 10, a markedly high load based on the combustion pressure is exerted on the pin bore surface 10b1 in a part closer to the crown surface 10d (closer to the combustion chamber) than the straight line L3 passing through the pin bore center BC. Fig. 5 shows an example of the surface pressure distribution of the pin bore surface 10b1 at the time when the combustion pressure is exerted on the crown surface 10d of the piston 10. The surface pressure distribution varies as the piston 10 moves. However, as shown in the example shown in Fig. 5, the surface pressure based on the combustion pressure is higher on the pin bore surface 10b1 closer to the crown surface 10d.

With the piston 10 according to the present embodiment, as described above, the oil grooves 26 are formed in the pin bore surface 10b1 at points closer to the crankcase than the straight line L3 passing through the pin bore center BC. Thus, with the configuration according to the present embodiment, since the oil grooves 26 are not formed in the part of the pin bore surface 10b1 closer to the combustion chamber (the crown surface 10d) than the straight line L3, the part of the pin bore surface 10b1 closer to the combustion chamber on which the high load based on the high combustion pressure is exerted can have a large area. Thus, the internal combustion engine according to the present embodiment can supply oil to the interior of the piston 10 through the connecting rod 14 and the piston pin 12 while suppressing deterioration of the durability of the piston 10.

In addition, according to the present embodiment, in the view of the piston 10 shown in Fig. 3 (that is, the view from the direction of the piston pin axis), the communication oil channel 28 for each pin boss 10a is formed in the pin bore surface 10b1 only on one side of the straight line L1 (on the left side of the straight line L1 in the example shown in Fig. 3). Alternatively, however, the communication oil channel for each pin boss 10a may extend along the pin bore 10b on both the sides of the pin bore 10b (on both the left and right sides of the straight line L1 in the example shown in Fig. 3). However, the configuration according to the present embodiment has an advantage over the configuration in which the communication oil channel is formed on both sides that the strength of the part of the piston 10 around the pin boss 10a can be more appropriately maintained. In addition, the communication oil channel 28 is not connected to the oil groove 26 at a point beyond the straight line L1 on the opposite side of the straight line L1 (on the right side of the straight line L1 in the example shown in Fig. 3) but is connected to the oil groove 26 on the one side described above before crossing the straight line L1. Thus, the strength of the part of the piston 10 around the pin boss 10a can be more appropriately maintained while minimizing the length of the communication oil channel 28.

In addition, according to the present embodiment, the oil grooves 26 and the communication oil channel 28 are formed in such a manner that the length of the oil groove 26 in the pin bore surface 10b1 along the circumference of the pin bore 10b is greater than the diameter of the communication oil channel 28. With such a configuration, the pressure loss of the oil flowing from the pin oil channel 32 to the communication oil channel 28 can be reduced.

In addition, according to the present embodiment, as shown in Fig. 3, the oil grooves 26 and the piston pin 12 are formed in such a manner that the angular length θg of the oil groove 26 in the pin bore surface 10b1 along the circumference of the pin bore 10b is greater than the angle θh between oil holes 32e adjacent along the circumference of the piston pin 12. As described above, the present embodiment is based on the assumption that the piston pin 12 can rotate with respect to both the pin bosses 10a of the piston 10 and the small end 14a of the connecting rod 14. Under such an assumption, the piston pin 12 continues rotating during operation of the internal combustion engine. Thus, in order that oil can be constantly supplied from the connecting rod 14 to the piston 10 through the piston pin 12, the connecting-rod oil groove 22 of the small end 14a of the connecting rod 14 and at least one of the oil holes 32a of the pin oil channel 32 have to overlap with each other at any time, and at least one of the oil holes 32e of the pin oil channel 32 and the oil groove 26 have to overlap with each other at any time, regardless of the rotational position of the piston pin 12. With the settings of the angular length θg and the angle θh described above, oil can be supplied to the piston 10 from the connecting rod through the piston pin 12 regardless of the rotational position of the piston pin 12.

### Second Embodiment

Next, a second embodiment of the present disclosure will be described with reference to Fig. 6. Fig. 6 is a diagram for illustrating a specific configuration of a pin boss 40a of a piston 40 and its periphery according to the second embodiment of the present disclosure. The piston 40 and a piston pin 42 are configured in the same manner as the piston 10 and the piston pin 12 according to the first embodiment except the points described below. More specifically, Fig. 6 is a cross-sectional view of the piston 40 and the piston pin 42 taken in the same manner as Fig. 3.

On the piston that reciprocates in the piston-crank mechanism, a force to press the piston against the cylinder wall at the side surface thereof that occurs because of an inclination of the connecting rod (referred to as a side thrust) is exerted. The side of the piston at which the side thrust is exerted on the side surface thereof immediately after the compression top dead center is referred to as a "thrust side", and the opposite side (more specifically, the opposite side of the cylinder axial line L1) is referred to as an "anti-thrust side".

In the configuration shown in Fig. 6, the right side is the thrust side, and the left side is the anti-thrust side. As can be seen from the surface pressure distribution shown in Fig. 6, a high load is exerted on a pin bore surface 40b1 of a pin bore 40b of the pin boss 40a on the thrust side immediately after combustion. More specifically, the load due to the side thrust is at the maximum at a point on the thrust side that is closer to the combustion chamber than the straight line L3 passing through the pin bore center BC.

As described above, a high load is exerted on the pin bore surface 40b1 on the thrust side immediately after combustion. Thus, according to the present embodiment, an oil groove 44 is formed in the pin bore surface 40b1 at a position described below. That is, the oil groove 44 according to the present embodiment is not formed in the part of the pin bore surface 40b1 closer to the combustion chamber than the straight line L3, as with the oil groove according to the first embodiment. In addition, according to the present embodiment, as shown in Fig. 6, the oil groove 44 is formed only on the anti-thrust side in the view of the piston 40 from the direction of the piston pin axis.

In addition, even in the part of the pin bore surface 40b1 closer to the crankcase than the straight line L3, the oil groove 44 is not formed on the thrust side with respect to the straight line L1 passing through the pin bore center BC. Thus, the oil groove 44 has an appropriate length in the part of the pin bore surface 40b1 that is closer to the crankcase than the straight line L3 and is on the anti-thrust side with respect to the straight line L1 passing through the pin bore center BC.

Specifically, in order to ensure constant oil supply under the assumption of the configuration described above with regard to the first embodiment, the angular length θg of the oil groove 44 is favorably greater than the angle θh between oil holes 43e of pin oil channels 43 of the piston pin 42 as described above. Thus, as shown in Fig. 6, the length of the oil groove 44 and the number of oil holes 43e are set to meet the requirement. According to the present embodiment, the oil groove 44 and a communication oil channel 46 connected thereto are formed in such a manner that the length of the oil groove 44 in the pin bore surface 40b1 along the circumference of the pin bore 40b is greater than the diameter of the communication oil channel 46.

According to the present embodiment, the communication oil channel 46 is formed in the pin bore surface 40b1 only on one side (the left side in the example shown in Fig. 6). In addition, according to the present embodiment, the one side on which the communication oil channel 28 is formed in the pin bore surface 40b1 is the anti-thrust side, as shown in Fig. 6.

As described above, according to the present embodiment, the oil groove 44 is formed only on the anti-thrust side in the view of the piston 40 from the direction of the piston pin axis. With such a configuration, the oil groove 44 is not formed in the part of the pin bore surface 40b1 on which a high load based on the side thrust is exerted, so that the part can have a large pressure receiving surface.

In addition, according to the present embodiment, the communication oil channel 46 is formed in the pin bore surface 40b1 only on one side, more specifically, the anti-thrust side. Alternatively, the communication oil channel for each pin boss 40a may be formed only on the thrust side or on both the anti-thrust side and the thrust side. However, the configuration according to the present embodiment has an advantage over those comparative configurations that the strength of the part of the pin boss 40a on the thrust side can be more appropriately maintained.

According to the second embodiment described above, as shown in Fig. 6, the oil groove 44 has been described as being formed only on the anti-thrust side and not being formed on the thrust side, as an example. However, the way of positioning the oil groove by considering the effect of the side thrust is not limited to the way described above. Specifically, the oil groove can be positioned in any way as far as the section of the oil groove extending in the pin bore surface along the circumference of the pin bore on the anti-thrust side with respect to the second straight line that passes through the pin bore center in parallel with the cylinder axial line is longer than the section extending in the pin bore surface on the thrust side, in the view of the piston from the direction of the piston pin axis. For example, the oil groove 44 shown in Fig. 6 may be modified to extend slightly into the thrust side beyond the straight line L1.

### Third Embodiment

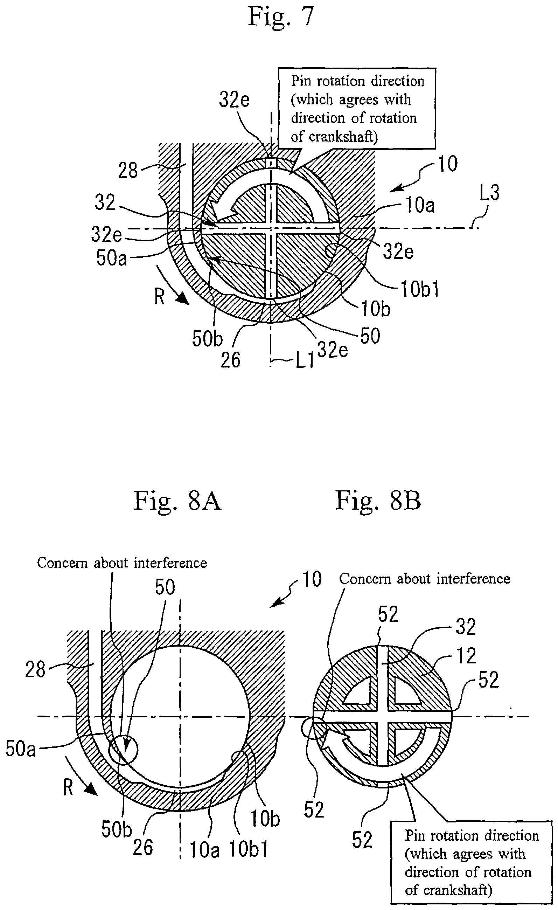

Next, a third embodiment of the present disclosure will be described with reference to Figs. 7, 8A and 8B. Fig. 7 is a diagram for illustrating characteristic parts of a configuration according to the third embodiment of the present disclosure. The configuration shown in Fig. 7 is basically the same as the configuration according to the first embodiment except that the configuration of the pin boss 10a is determined by additionally considering the direction of rotation of the crankshaft 16 as described below.

As shown in Fig. 7, the pin bore surface 10b1 has a sharp edge 50 at the connection between the oil groove 26 and the communication oil channel 28. In addition, as described above, the piston pin 12 can rotate with respect to both the pin boss 10a of the piston 10 and the small end 14a of the connecting rod 14. In addition, the pin oil channel 32 opens in the outer surface of the piston pin to form the oil holes 32e at positions corresponding to each oil groove 26. The present embodiment provides a more favorable configuration if these assumptions hold.

More specifically, according to the present embodiment, if the communication oil channel 28 is formed in the pin bore surface 10b1 on one side of the straight line L1, the communication oil channel 28 is formed as follows. That is, in the part where the communication oil channel 28 is formed, a direction R from a base end 50a toward a tip end 50b of the edge 50 of the pin bore surface 10b1 agrees with the direction of rotation of the crankshaft 16 in the view of the piston 10 and the crankshaft 16 (not shown in Fig. 7) from the direction of the piston pin axis (that is, the view in Fig. 7).

As described above, if the piston pin 12 can rotate with respect to both the pin boss 10a of the piston 10 and the small end 14a of the connecting rod 14, the piston pin 12 continues rotating during operation of the internal combustion engine. It has been experimentally found that the direction of this rotation of the piston pin 12 (the pin rotation direction) agrees with the direction of rotation of the crankshaft 16. Therefore, the direction R can be made to agree with the pin rotation direction during operation of the engine by determining the part where the communication oil channel 28 is formed in such a manner that the direction R concerning the edge 50 agrees with the direction of rotation of the crankshaft 16.

Figs. 8A and 8B are diagrams for illustrating effects of the configuration according to the third embodiment of the present disclosure. The configuration shown in Figs. 8A and 8B is to be referred to for comparison with the configuration shown in Fig. 7. In the configuration shown in Figs. 8A and 8B, the direction R concerning the edge 50 and the pin rotation direction (the direction of rotation of the crankshaft 16) are opposite to each other, unlike the configuration shown in Fig. 7. In Figs. 8A and 8B, the pin boss 10a and the piston pin 12 are separately shown for convenience of explanation.

When the pin oil channel in the piston pin provides the oil hole at a position corresponding to the oil groove as with the oil hole 32e of the pin oil channel 32, the oil hole 32e may have an edge 52 as shown in Fig. 8B. If the configuration shown in Figs. 8A and 8B is adopted when the oil hole 32e has the edge 52, the edge 52 may interfere with (or be snagged on) the edge 50 of the pin bore surface 10b1 during rotation of the piston pin 12.

To the contrary, with the configuration according to the present embodiment shown in Fig. 7, the direction R concerning the edge 50 agrees with the pin rotation direction (the direction of rotation of the crankshaft 16) during operation of the engine. Thus, the interference between the edges 50 and 52 can be prevented.

In the above first to third embodiments, the configurations in which the piston pin 12 (or 42) can rotate with respect to both the pin boss 10a (or 40a) of the piston 10 (or 40) and the small end 14a of the connecting rod 14 have been described as an example. However, except for the examples that require the aforementioned configurations as the assumption, the piston pin may be rotatable with respect to only one of the pin boss and the small end of the connecting rod and fixed with respect to the other by press-fitting or other fixing process.

In the first to third embodiments described above, the cooling channel 24 for cooling the piston 10 (or 40) is used as the oil channel in the upper part of the piston to which the communication oil channel 28 (or 46) is connected, as an example. However, the oil channel in the upper part of the piston to which the communication oil channel is connected may be another oil channel formed for other purpose than for cooling the piston.

In the first to third embodiments described above, each pin boss 10a (or 40a) has one oil groove 26 (or 44), as an example. However, each pin boss may have a plurality of oil grooves. In addition, when the communication oil channel 28 (or 46) is formed in the pin bore surface 10b1 (or 40b1) only on one side of the straight line L1 as in the first to third embodiments, a plurality of communication oil channels may be provided for each pin boss 10a (or 40a), unlike the communication oil channel 28 or the like.

The embodiments and various modifications described above may be appropriately combined in various ways other than those explicitly shown, and may be modified in various ways without departing from the scope of the invention as defined by the claims.

Note that the straight lines L3 and L1 in the first to third embodiments described above correspond to a "first straight line" and a "second straight line" according to the present disclosure, respectively.

## Claims

1. An internal combustion engine that includes a piston-crank mechanism, comprising:
a piston pin (12; 42) that is coupled to a connecting rod (14) and includes a pin oil channel (32; 43) to which oil is supplied from the connecting rod (14); and
a piston (10; 40) that includes a pin boss (10a; 40a) having a pin bore (10b; 40b) in which the piston pin (12; 42) is inserted, an oil groove (26; 44) formed in a pin bore surface (10b1; 40b1), which is a surface of the pin bore, and a communication oil channel (28; 46) that connects an oil channel (24) in an upper part of the piston (10; 40) that is provided closer to a combustion chamber than the piston pin (12; 42) and the oil groove (26; 44) to each other,
wherein the pin oil channel (32; 43) opens in an outer surface of the piston pin (12; 42) at a point corresponding to the oil groove (26; 44), and
in a view of the piston (10; 40) from a direction of a piston pin axis, the oil groove (26; 44) is formed in the pin bore surface (10b1; 40b1) at a position closer to a crankcase than a first straight line (L3), which passes through a center of the pin bore (10b; 40b) and is perpendicular to a cylinder axial line, and is not formed in a part of the pin bore surface (10b1; 40b1) that is closer to the combustion chamber than the first straight line (L3).

2. The internal combustion engine according to claim 1,
wherein in the view of the piston (40) from the direction of the piston pin axis, the oil groove (44) is formed in the pin bore surface (40b1) in a circumferential direction of the pin bore (40b) in such a manner that a section of the oil groove (44) extending on an anti-thrust side is longer than a section of the oil groove (44) extending on a thrust side, the thrust side being a side of the piston (40) at which a side thrust is exerted on the side surface of the piston (40) immediately after a compression top dead center with respect to a second straight line (L1), which passes through the center of the pin bore (40b) and is in parallel with the cylinder axial line, and the anti-thrust side being a side of the piston (40) opposite to the thrust side.

3. The internal combustion engine according to claim 1 or 2,
wherein in the view of the piston (10; 40) from the direction of the piston pin axis, the communication oil channel (28; 46) is formed in the pin bore surface (10b1; 40b1) only on one side of the second straight line (L1) that passes through the center of the pin bore (10b; 40b) and is parallel with the cylinder axial line.

4. The internal combustion engine according to claim 3,
wherein a length of the oil groove (26; 44) in the pin bore surface (10b1; 40b1) in the circumferential direction of the pin bore (10b; 40b) is greater than a diameter of the communication oil channel (28; 46).

5. The internal combustion engine according to claim 3 or 4,
wherein the one side on which the communication oil channel (46) is formed in the pin bore surface (40b1) is an anti-thrust side that is opposite to a thrust side at which a side thrust is exerted on the side surface of the piston (40) immediately after a compression top dead center.

6. The internal combustion engine according to any one of claims 3 to 5,
wherein the piston pin (12) is rotatable with respect to both the connecting rod (14) and the pin boss (10a),
wherein the pin oil channel (32) opens in the outer surface of the piston pin (12) to form an oil hole at a position corresponding to the oil groove (26),
wherein the pin bore surface (10b1) has a sharp edge (50) at a connection between the oil groove (26) and the communication oil channel (28), and
wherein the one side on which the communication oil channel (28) is formed in the pin bore surface (10b1) is determined so that a direction from a base end (50a) to a tip end (50b) of the edge (50) of the pin bore surface (10b1) agrees with a direction of rotation of a crankshaft (16) in the view of the piston (10) and the crankshaft (16) from the direction of the piston pin axis.

7. The internal combustion engine according to any one of claims 1 to 6,
wherein the piston pin (12; 42) is rotatable with respect to both the connecting rod (14) and the pin boss (10a; 40a),
wherein the pin oil channel (32; 43) opens in the outer surface of the piston pin (12; 42) to form a plurality of oil holes (32e; 43e) at positions corresponding to the oil groove (26; 44), and
wherein an angular length (θg) of the oil groove (26; 44) in the pin bore surface (10b1; 40b1) in the circumferential direction of the pin bore (10b; 40b) is greater than an angle (θh) between adjacent two of the plurality of oil holes (32c; 43e) in the circumferential direction of the piston (10; 40).
